# EUROPEAN PATENT SPECIFICATION

(11) **EP 3 065 091 B1**
(45) Date of publication and mention of the grant of the patent: **25.04.2018**
(21) Application number: 16157121.1
(22) Date of filing: 24.02.2016
(51) Int. Cl.: G06Q 10/00, G06K 19/08, G06Q 30/00, G06Q 10/08

(54) **PRODUCT AUTHENTICATION SYSTEM**
PRODUKTAUTHENTIFIZIERUNGSSYSTEM
SYSTEME D'AUTHENTIFICATION DE PRODUIT

(30) Priority: 05.03.2015 IT UB20150077
(43) Date of publication of application: 07.09.2016
(73) Proprietor: Istituto Poligrafico e Zecca dello Stato S.p.A., 00138 Roma (RM) (IT)
(72) Inventor: GHISA, Giuseppe, 00138 Rome (IT); LUCIANI, Laura, 00138 Rome (IT); INFORTUNA, Francesco, 00138 Rome (IT)
(74) Representative: Papa, Elisabetta

(56) References cited:
- WO-A1-2009/086368
- WO-A1-2014/014508
- US-A1- 2006 244 253
- US-A1- 2006 290 501

## Description

The present invention relates to a system for verifying the authenticity of a product.

More precisely, the present invention relates to a system which is based on a label that has a FIRST VERIFICATION CODE, a second VALIDATION CODE, possibly a third ACCESS CODE for the addressing to a database, and a GRAPHICS which is not optically readable.

Through a procedure based on the above elements (FIRST VERIFICATION CODE, VALIDATION CODE, ACCESS CODE, GRAPHICS), the user is able to determine if the product purchased by him/her is authentic.

In case of inconsistency of the foregoing elements, the system fails the authentication process of the goods and the buyer has the option of activating an ALERT to the relevant authorities, by connecting to a reference site, or implementing any other action aimed at clarifying the incongruity on the product through the point of sale.

### State of the art

The solutions available on the market for the protection of goods from counterfeiting are multiple, some are suitable to ensure the authenticity of specific high-cost products type, other are suitable for the tracking and verification of widely available goods, still others are usable for a wide range of products.

The most common technologies are based on the verification by means of automatic acquisition of the information on a label (uncoded and/or in the form of a mono- or two-dimensional barcode) and transmission to a remote data processing system (database), able to handle countless information about the characteristics of the good.

In recent years, RFID technologies have had considerable development as well, which enable the rapid verification of complex information.

A wide range of solutions allows the end user to directly verify the authenticity of the product by means of smartphones, both in acquisition mode and Qcode/barcode decoding, or using NFC or similar technology.

Taking an overview of the patented and available solutions, by type, we find:
- Labels with bar codes realized with supports made secure by means of watermark, printed elements or special applications (e.g. holograms, security fibrils, etc.). In these, the element of physical peculiarity is used in order to certify the authenticity of a product (US 2006/0244253 A1, US 2009/0080760 A1, US 2010/0012728, US 2013/8533075 B, GB 23837768).
- Labels that are based on a mono or two-dimensional barcodes, RFID chips or the like. These, once associated to a product, allow the buyer to verify its genuineness by the reading of the code using common automatic devices on the market such as smartphones, on which dedicated software is installed, i.e. "app" that can connect to a database and effect the necessary queries for the product authentication.

Patents claiming the most interesting solutions are hereafter cited: WO 2012/020291, US 2013/0193200 A1, US 2012/0187185 A1, US 2014/0122889, WO 2013/157017 A1, WO 2014/055356, GB 2383776, WO 2010 / 050 928 A1, WO 94/22580, JP 4591216 B2, EP 2736035 A2, EP 2096851 A1, 2012 CN 10047466, CN 2012 10049530, 10029851 CN 2013, CN 2010 10199867, WO 2014/014401.

The solutions based on labels that contain elements of peculiarity (first point) have the disadvantage of having to use, for the validation, a dedicated instrument, which generally has a considerable influence on the cost of the solution or requires experts for the verification of authenticity.

Those indicated in the second point are sometimes not able to intercept the fraud in case of a valid code is duplicated or reused. Non-genuine products may then be provided with seemingly valid codes which would authenticate the former as genuine (false positive) and this would jeopardize the whole validation system.

In particular, patent WO 2012/020291 provides for the use of information printed on the label as a OR code or contained in a microprocessor and of a specific database, in such a way that the consumer can, by the reading of the code, query the database and access to detailed product information. The fundamental criticality of the proposed solution is the impossibility to intercept fraud arising from the use of true labels reused by applying them on false products.

In patent WO 2014/014401, a system of at least two labels, each containing a series of characters which can be read by irreversibly altering the physical support, is instead claimed. In this case, the contained information are constructed in such a way to satisfy a predetermined algorithm and to produce a validation output which guarantees the authenticity of the product. The proposed method, however, requires a complex process of generation and an incorrect mating of the labels (mismatching) would invalidate the entire verification system. It is also difficult, but not impossible, the duplication of labels. Document WO2014/014508 relates to an Rfid which is shielded by a label protecting it from unauthorised readings. Document WO2009/086368 relates to an RFID having applied a conductive label for shielding it from reads. Document US2006/0244253 relates to generating a unique graph on a lable for item identification. The above represented problems, in particular in patents WO 2012/020291 and WO 2014/014401, are solved by the new devised method that combines simplicity of production and a technology, which is advanced and of practical application and secure use.

The object of the present invention is to provide an effective product authentication system that solves the problems and overcomes the drawbacks of the prior art.

It is subject-matter of the present invention a system according to the attached claims. The invention will now be described by way of example but not by way of limitation, with particular reference to the figures of the accompanying drawings, in which:
- Figure 1 shows an embodiment of the label according to the invention, in its various layers;
- Figure 2 shows a flow chart of the management of product of authentication according to the invention system;
- Figure 3 shows a block diagram that illustrates the flow of information between the various devices that are part of, in one embodiment, the system according to the invention;
- Figure 4 shows a flow diagram illustrating the process of verification of authenticity of a product according to an embodiment of the invention.

### Detailed description of the invention

### Label and numeric codes

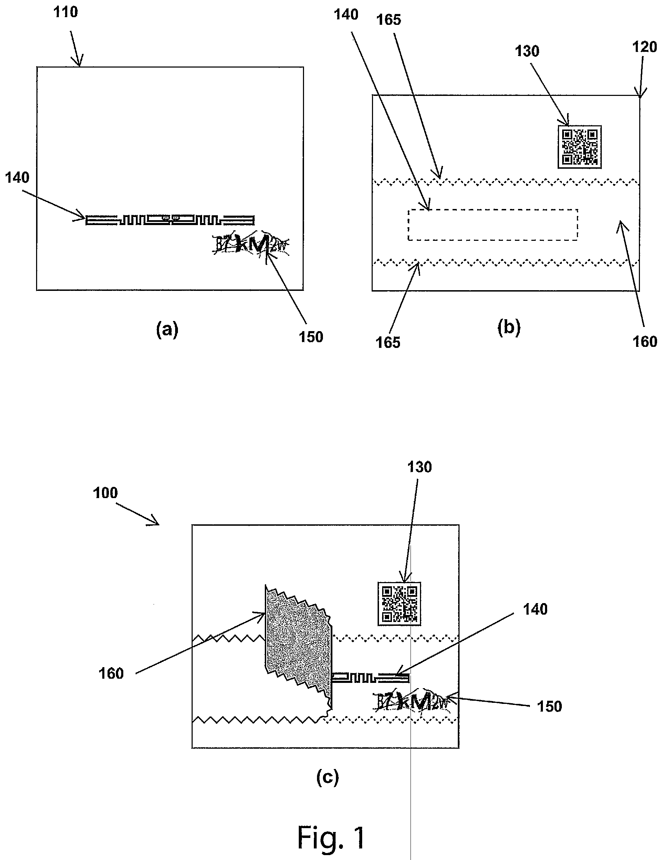

Referring to Figure 1, the label 100 may be of adhesive type or other type depending on its end use and may also contain (printed) information relating to the product or commercial or additional security or identification elements, such as e.g. holographic stripes, logos, trademarks, etc. With this technology labels can be realized, which are able to ensure the authenticity of wines, spirits, medications, spare parts of motor vehicles, watches, hi-fi equipment, electronic or any product. It can be made of any materials (paper, synthetic media, etc.) and must be equipped with a RFID microprocessor or other device which can be electronically interrogated has a memory for storing data, possibly provided with a security system to prevent the emulation/cloning, as well as the fraudulent interception of information during communication.

The label 100 is composed of two layers 110 and 120, as shown in Fig. 1. In said first layer 110 an RFID microprocessor or other device 140 is attached, which can be interrogated electronically and has a memory for storing data, which are used for the registration of the following codes:
- FIRST VERIFICATION CODE, adapted to the assessment of the first label interrogation;
- VALIDATION CODE, calculated using a special algorithm; and optionally:
- ACCESS CODE, which is the access key to be able to query a database (optional).

On the same first layer 110 a GRAPHICS 150 will be also present uncoded (printed or reported otherwise), which is not optically readable, and is predetermined by a specific algorithm. The positioning of such GRAPHICS 150 on the first layer 110, and not on the second layer 120, enables to improve efficiency of the production phases, concurrently avoiding "mismatch" problems due to the coupling of the two layers, since all the information that contribute to the validation of the label are contained in the first layer 110.

The term "not optically readable" it is to be understood as not interpretable with optical recognition devices, such as it occurs with the CAPTCHA code.

The GRAPHICS 150 shall be covered by the removable portion 160 of the second layer.

On the second layer 120 the following is deposed: a conductive ink, a metal film or other means, at least on the removable portion 160, with the function of preventing the operation of the microprocessor antenna (RFID), present on the first layer 110, as long as the latter is not removed (antenna function can be interrupted by short-circuiting, electromagnetic shielding or other). To facilitate the removal of the portion 160, it is equipped with micro-cuts or punching 165 ("kiss-cutting" viz. cutting of layer 120 only). In this way, only by removing the portion 160 the RFID antenna is allowed to receive signals from the interrogation device (smartphone or other). The use of micro-cuts causes the removal of the protection layer 160 to alter, in an irreversible way, the label 100, showing to any user that it is an already used label, and it hinders the reuse as virgin label. The particular embodiment of the punching for this purpose is possible in many known ways. In general, therefore, any means that allows showing the irreversible removal will be suitable for the purpose. In other words, the removable portion will be configured so as to show, in use, that the removal took place in an irreversible way.

The cover 160 of the microprocessor or other data storing means with a screening or short-circuiting element prevents both sudden and improper readings, making it impossible to attempt to changing the information contained in the microprocessor, which would jeopardize the product validation system.

On the second layer 120, graphic elements can also be printed or security elements can be applied, that distinguish the product, or a "QR code" 130 can be printed, which is to be used to access a reference site containing product information.

The two layers 110 and 120 are permanently coupled together so as to obtain label 100 as a single element, which incorporates in its interior the RFID microprocessor or other means of data storage 140 and the graphic element 150. The lower part of the label so formed may be adhesive or free, depending on the specific application to which it is dedicated.

### Verification system

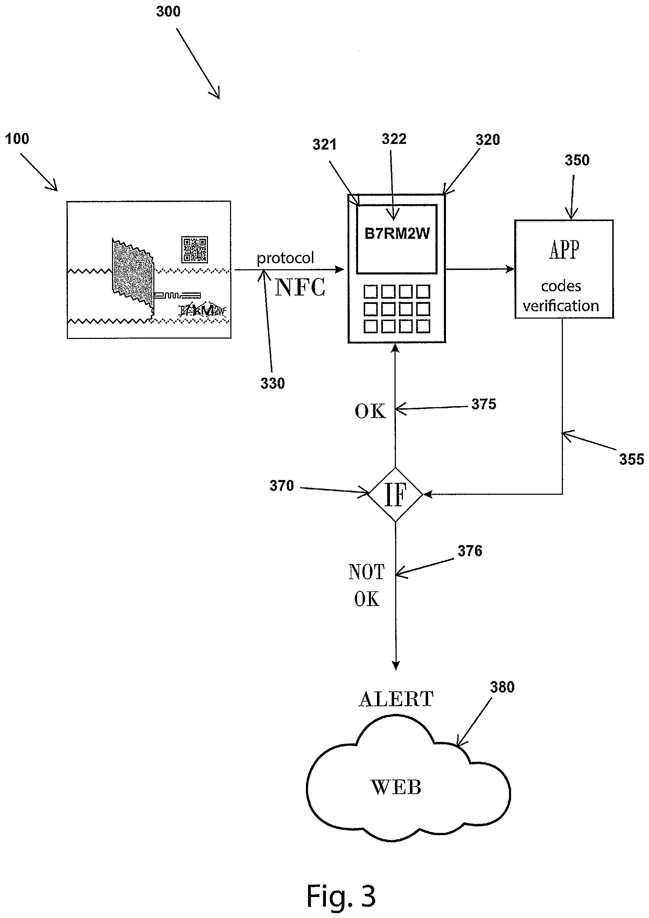

Referring to Figure 3, the verification system 300 is composed of a label 100, dedicated software (not shown), a possible web interface 380, intelligent readers 320 having wide diffusion on the market (for example, smartphone) and an "app" 350, which is suitable for the verification of the mentioned codes.

The smartphone 320 reads by interaction (NFC protocol) 330 with an RFID, included in label 100, the above codes. The system 300 (specifically the smartphone 320) verifies the accuracy of the FIRST VERIFICATION CODE to ensure it is a first reading.

If the FIRST VERIFICATION CODE is correct, the "app" changes in the RFID memory the status of such a code from "first reading" to "read" and blocks the ability to make further writing on the RFID (or other means of data storage). Subsequently, the "app" also verifies the correctness of the VALIDATION CODE and possibly uses the ACCESS one for the addressing to a remote database (and/or authentication at the remote server).

If the verification of compliance of VALIDATION CODE in 370 is positive, an OUTPUT message 322 is produced in 375 on the screen 321 of the intelligent reader 320 (smartphone), whose graphic content must correspond at least partially to the GRAPHICS 150 reported uncoded on label 100 (e.g. visual comparison by the user).

By way of example, the correspondence can be realized in the following ways:
- the GRAPHICS is a drawing with a form of an object and the output is at least the name of the object;
- the GRAPHICS is a name written with graphical accessory elements, and the output is at least a text string corresponding to the name;
- the GRAPHICS is a drawing and the output is at least the same or very similar drawings.

The latter, not recognizable by automatic reading, prevent the system emulation through an "app" developed for fraudulent purposes.

If the verification of compliance of VALIDATION CODE 370 is negative, the process of verifying will fail and the purchaser will be able to connect to the reference site 380 and activate in 376 an ALERT to the relevant authorities or implement any other action for the clarification of incongruity on the product through the store.

The information resulting from the verification, along with any additional data, can be recorded, as optional functions, on a database for the structuring of information useful both to the system operator and the user (identification, tracking, etc.).

### Software

With reference to Figure 3, the system 300, according to the invention, in one embodiment, involves the use of the following three software modules:
- SW1 - Software for the generation of the codes contained in the labels. It makes use of a specific encryption algorithm;
- SW2 - Software for the generation of graphic files for printing and programming the electronic storage means (RFID). It can also have a function for interfacing/population of a database;
- SW3 - Software for automatic validation and product authentication ("app" of codes verifications).

### Intelligent readers

For the reading of the data indicated on the label 100 and for the execution of the validation process, the use of a "smart" reader (smartphone) is needed, which, through a dedicated codes verification "app", is able to perform the process of verification of authenticity of the product.

Such a device could be for example a smartphone 320 equipped with NFC reader (not shown), possible geo-referencing device (not shown) or other (for example camera, not shown).

### Operation of the product authentication system

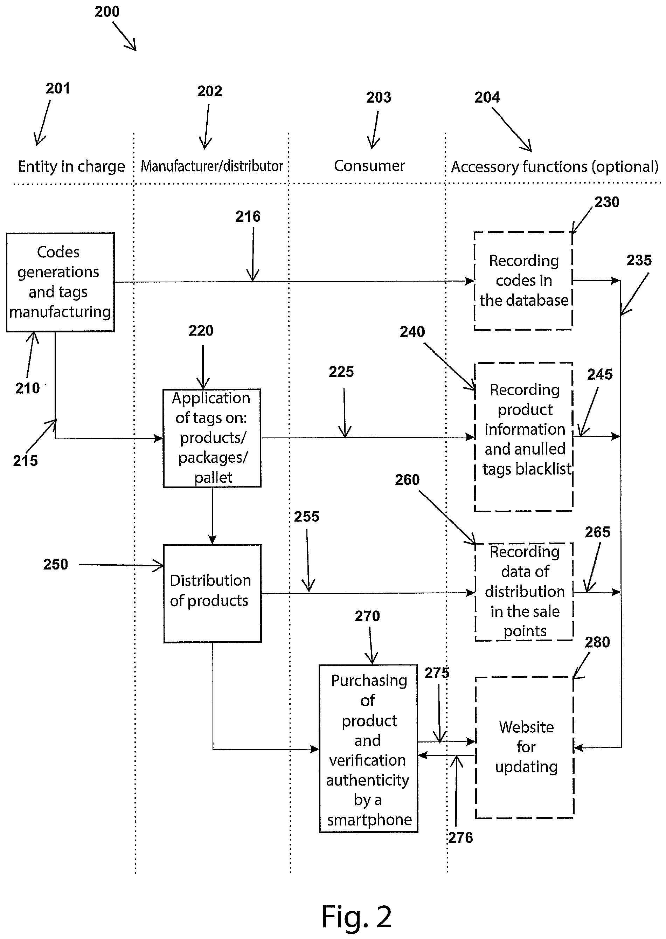

In Fig. 2 a flow chart 200 with the various parties involved in authentication in a preferred configuration of the invention is shown.

A named authority 201 generates in 210 the above codes, a number of times which is a function of the size of the product lot one wants to protect, and produces a stock of labels.

These codes, as accessory function 204, are sent in 216 to a database 230 for the recording of the codes.

The stock of manufactured labels 210 is sent in 215 to the manufacturer/distributor 202 for the application in 220 on the single package/parcel/pallet, and, as an ancillary function 204, all information concerning the product and the list of canceled labels are sent in 225 to a database for the recording in 240 of product information and of the blacklist of the canceled labels.

Subsequently, the manufacturer/distributor 202 performs the distribution of the products in 250, whereon the labels 220 have been previously applied and, as an accessory function 204, the data of product distribution in stores are sent in 255 and recorded in 260.

The consumer 203 buys the product distributed in 270 and, through the label, it verifies the authenticity by a smartphone and may, as an optional feature 204, ask at 275 the website 280 for additional product information and may provide information in 275 relevant to product authentication (such as georeferencing information). The web site 280 provides the additional product information requested by the consumer 203 through interaction 276.

As additional functions 204, the codes recorded in the database 230, the product information, the "blacklist" of the labels canceled in 240 and data of product distribution in stores in 260, are sent, respectively through the interactions 235, 245 and 265, to the website 280, for data updating.

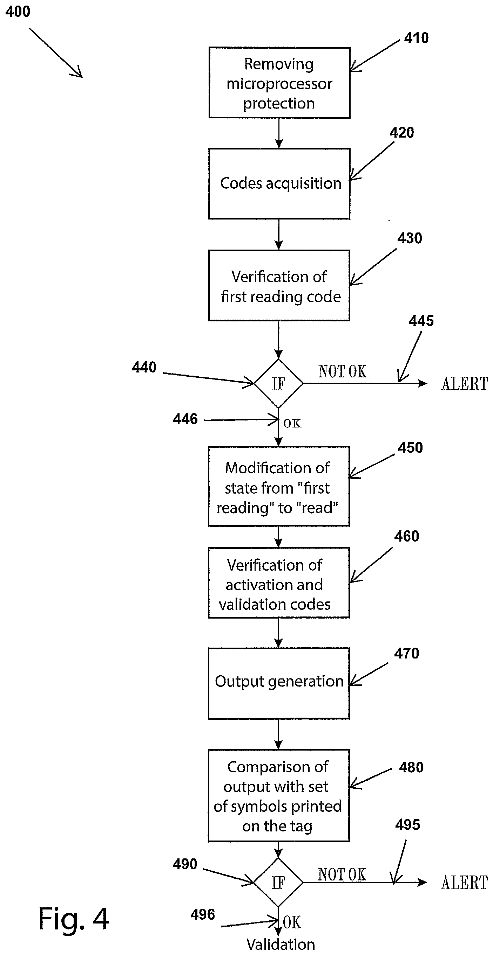

The flow chart 400 illustrated in Figure 4 shows the operation of the system in a preferred configuration, through the following steps:
- performing in 410 the activation of the validation system by the removal of the microprocessor protection;
- performing in 420 the acquisition of the codes;
- executing in 430 the reading of the FIRST VERIFICATION CODE (verifying the consistency with respect to the code generation specifications, or in any other known or future way);
- if in 440 the verification finds the correctness of the FIRST VERIFICATION CODE, the flow provides a command 446 to execute in 450 the change of status from "First Reading" to "Read", and to block the writing on the memory of the microprocessor;
- if in 440 the verification is not successful (already read label or wrong FIRST VERIFICATION CODE), the "app" can send in 445 an ALERT;
- performing a test 460, which consists in verifying at least the VALIDATION CODE;
- in response to the test in 460, the generation of an output (set of on-screen symbols) in 470 is obtained;
- executing in 480 the comparison between the output generated in 470 and the GRAPHICS present on the label;
- if in 490 the comparison gives a positive outcome in 496, the user gets the information that the product he/she bought is authentic;
- if in 490 the comparison (e.g. visual) of the user gives a negative outcome (altered label, false label, etc.) the user can activate a complaint procedure or an ALERT on the remote system in 495.

Subsequently to the verification of the VALIDATION CODE, geo-temporal coordinates of the event (the place and date of the inspection) can be recorded, and this can be, on a remote server, the activation of the guarantee certificate of the product associated to label or, directly, it can provide documentary evidence of the warranty start date. This last phase can be initiated with user command, or automatically immediately after the reading of the FIRST VERIFICATION CODE (subject to successful completion of the process) and can also be based on other product identification information (for example indication of the product serial number).

### Advantages of the invention

The system according to the invention is a simple and effective tool to verify the authenticity of a product and counteract the introduction on the market of fake products, which, if well manufactured, consumers would buy considering them authentic.

Particularly innovative and advantageous appears to be the label construction with all the fundamental elements (codes, graphic element, microprocessor) on the first, not visible, layer, facilitating the production of the same at low cost and at the same time the inhibition of the antenna operation of the microprocessor by a second layer of material (configured for the short-circuiting of the antenna or its electromagnetic shielding), that once removed can no longer be restored to the original state.

This inhibition mechanism also protects the microprocessor from any readings/improper writings.

In addition, innovation appears in the use of a FIRST VERIFICATION CODE that is permanently changed upon first reading of the label, making it impossible to reuse the same label. Finally, since at the time of the modification the geo-temporal coordinates of the event can be recorded (the place and date of purchase/validation and other ancillary information such as the product serial number), this may constitute the activation of the certificate of guarantee on the product.

In the foregoing, preferred embodiments have been described and variants of the present invention have been suggested, but it is to be understood that those skilled in the art can make modifications and changes, without so departing from the related scope of protection, as defined by the enclosed claims.

## Claims

1. Label (100) for the verification of authenticity of a product, comprising at least a first layer (110) and a second layer (120) anchored to said first layer, on said first layer (110) wirelessly interrogable electronic means (140) being fixed, which are equipped with memory, said second layer (120) including a removable portion (160), at least on said removable portion (160), interrogation interruption means being provided, which are adapted to interrupt the interrogation of said wirelessly interrogable electronic means (140);
the label being **characterized in that**:
- said removable portion (160) is configured so as to show irreversibly, in use, that it has been removed;
- on said wirelessly interrogable electronic means (140), at least a FIRST VERIFICATION CODE, for verification of the first reading of the label, and at least a VALIDATION CODE, for verification of authenticity of the label, are stored;
- on said first layer a GRAPHICS (150) is present, which is covered by the removable portion (160), is not readable by an optical recognition device, and is generated by an algorithm based on said at least a VALIDATION CODE.

2. Label according to claim 1, **characterized in that** said interrogation interruption means are constituted by electromagnetic shielding means or short-circuiting means.

3. Label according to claim 1 or 2, **characterized in that** on said wirelessly interrogable electronic means (140) an ACCESS CODE is further stored, which is adapted for addressing to a remote database.

4. Label according to any of claims 1 to 3, **characterized in that** said wirelessly interrogable electronic means (140) are constituted by or include an RFID.

5. Label according to any of claims 1 to 4, **characterized in that** on said second layer (120) a QR-code (130) is provided.

6. Label according to claim 5, **characterized in that** the QR-code (130) is provided outside of said portion (160).

7. Label according to any of claims 1 to 6, **characterized in that** it comprises punching (165) to allow the removal of said removable portion (160), said punching being adapted to irreversibly show, in use, that the removal occurred.

8. Label according to any of claims 1 to 7, **characterized in that** said at least a VALIDATION CODE includes a serial number of said wirelessly interrogable electronic means (140).

9. A method (300) for label authentication, **characterized by** the fact of using a label (100) for product authentication as defined in any one of claims 1 to 8, and by the fact of performing the following steps:
A. removing the removable portion (160) from said label (100);
B. interrogating, by a reading device (320), said wirelessly interrogable electronic means (140), to obtain said at least a FIRST VERIFICATION CODE and said at least a VALIDATION CODE;
C. verifying, by a processor, that said at least FIRST VERIFICATION CODE is valid;
D. in the case of a positive outcome of step C, storing, in the memory of said wirelessly interrogable electronic means (140), information of successful reading of said at least a FIRST VERIFICATION CODE;
E. generating, by said processor, at least on the basis of said at least a VALIDATION CODE, a set of symbols;
F. showing, on a display screen, said set of symbols of step E;
G. verifying, by a user, that said set of symbols shown on said display screen at least partially corresponds to the graphical content of said GRAPHICS (150).

10. Method according to claim 9, **characterized in that** an alarm or indication of impossibility to proceed since the label has already been used is activated in the case in which the result of step G is negative.

11. Method according to claim 10, **characterized in that** the alarm or indication of impossibility to proceed is activated via WEB interface (380).

12. Method according to any claim 9 to 11, **characterized in** performing the following further step:
H. communicating, by said processor, said at least a FIRST VERIFICATION CODE, and optionally other information associated with the product, to a remote server, which consequently activates a warranty of a product associated with said label.

13. Method according to any of claims 9 to 12, **characterized in that** in step B also said ACCESS CODE is read, and a further step is performed to connect to a remote server and address to a database on the basis of said ACCESS CODE.

14. Method according to any of claims 9 to 13, **characterized in that**, if the outcome of step C is negative, an alarm or indication of already used or non-usable label is sent to said display screen.

15. A system (300) of product authentication, comprising:
- at least a label (100) for product authentication, comprising wirelessly interrogable electronic means which are equipped with memory (140);
- at least a reading device (320), in particular a smartphone, for reading said wirelessly interrogable electronic means (140) for obtaining one or more codes, the reading device being provided with a display screen;
- a processor that executes a program for verification of the authenticity of the label (100) on the basis of said one or more codes,
the system being **characterized in that**:
- said label is the label according to any one of claims 1 to 8;
- said program is configured to perform the steps B, C, E, F of the method according to any one of claims 9 to 14.

## Patentansprüche

1. Label (100) zur Verifizierung einer Authentizität eine Produkts, das wenigstens eine erste Schicht (110) und eine an der ersten Schicht befestigte zweite Schicht (120) umfasst, wobei an der ersten Schicht (110) drahtlos abfragbare elektronische Mittel (140) befestigt sind, die mit einem Speicher ausgestattet sind, wobei die zweite Schicht (120) einen entfernbaren Teil (160) enthält, wobei wenigstens auf dem entfernbaren Teil (160) Abfrageunterbrechnungsmittel vorgesehen sind, welche geeignet sind, die Abfrage der drahtlos abfragbaren elektronischen Mittel (140) zu unterbrechen;
wobei das Label **dadurch gekennzeichnet ist, dass**
- der entfernbare Teil (160) konfiguriert ist, so dass er bei Verwendung irreversibel anzeigt, dass er entfernt wurde;
- auf den drahtlos abfragbaren elektronischen Mitteln (140) wenigsten ein ERSTER VERIFIZIERUNGSCODE zur Verifizierung des ersten Lesens des Labels sowie wenigstens ein VALIDIERUNGSCODE zur Verifizierung einer Authentizität des Labels gespeichert sind;
- auf der ersten Schicht eine GRAPHIK (150) vorgesehen ist, die von dem entfernbaren Teil (160) entfernbar ist und von einem optischen Erkennungsgerät nicht lesbar ist sowie von einem Algorithmus erzeugt wird, der auf Basis des wenigstens einen VALIDIERUNGSCODES erzeugt wird.

2. Label nach Anspruch 1, **dadurch gekennzeichnet, dass** die Abfrageunterbrechnungsmittel durch elektromagnetische Abschirmmittel oder Kurzschlussmittel gebildet sind.

3. Label nach Anspruch 1 oder 2, **dadurch gekennzeichnet, dass** auf den drahtlos abfragbaren elektronischen Mitteln (140) weiterhin ein ZUGANGSCODE gespeichert ist, der geeignet ist, um eine entfernte Datenbank anzusprechen.

4. Label nach einem der Ansprüche 1 bis 3, **dadurch gekennzeichnet, dass** die drahtlos abfragbaren elektronischen Mittel (140) durch einen RFID gebildet sind oder einen solchen enthalten.

5. Label nach einem der Ansprüche 1 bis 4, **dadurch gekennzeichnet, dass** auf der zweiten Schicht (120) ein QR-Code (130) vorgesehen ist.

6. Label nach Anspruch 5, **dadurch gekennzeichnet, dass** der QR-Code (130) außerhalb des Teils (160) vorgesehen ist.

7. Label nach einem der Ansprüche 1 bis 6, **dadurch gekennzeichnet, dass** es eine Stanzung (165) umfasst, um die Entfernung des entfernbaren Teils (160) zu ermöglichen, wobei die Stanzung geeignet ist, um bei Verwendung irreversibel zu zeigen, dass die Entfernung stattgefunden hat.

8. Label nach einem der Ansprüche 1 bis 7, **dadurch gekennzeichnet, dass** der wenigstens eine VALIDIERUNGSCODE eine Seriennummer der drahtlos abfragbaren elektronischen Mittel (140) enthält.

9. Verfahren (300) zur Labelauthentifizierung, **gekennzeichnet durch** die Tatsache einer Verwendung eines Labels (100) zur Produktauthentifizierung, wie in einem der Ansprüche 1 bis 8 definiert, sowie durch die Tatsache des Ausführens der folgenden Schritte:
A. Entfernen des entfernbaren Teils (160) von dem Label (100);
B. Abfragen der drahtlos abfragbaren elektronischen Mittel (140) durch ein Lesegerät (320), um wenigstens den ERSTEN VERIFIZIERUNGSCODE und wenigstens einen VALIDIERUNGSCODE zu erhalten;
C. Verifizieren, durch einen Prozessor, dass der wenigstens eine ERSTE VERIFIZIERUNGSCODE gültig ist;
D. Im Falle eines positiven Ergebnisses von Schritt C, Speichern von Information bezüglich des erfolgreichen Lesens des wenigstens einen ERSTEN VERIFIZIE-RUNGSCODES in dem Speicher der drahtlos abfragbaren elektronischen Mittel (140);
E. Erzeugen, durch den Prozessor, wenigstens auf der Basis des wenigstens einen VALIDIERUNGSCODES, eines Satzes von Symbolen;
F. Zeigen des Satzes von Symbolen aus Schritt E auf einem Anzeigebildschirm;
G. Verifizieren durch einen Nutzer, dass der Satz von Symbolen, der auf dem Anzeigebildschirm gezeigt wird, wenigstens teilweise dem graphischen Inhalt der GRAPHIK (150) entspricht.

10. Verfahren nach Anspruch 9, **dadurch gekennzeichnet, dass** ein Alarm oder eine Anzeige der Unmöglichkeit fortzufahren aktiviert wird, da das Label bereits verwendet wurde, in dem Fall, in dem das Ergebnis aus Schritt G negativ ist.

11. Verfahren nach Anspruch 10, **dadurch gekennzeichnet, dass** der Alarm oder die Anzeige der Unmöglichkeit fortzufahren über eine WEB-Schnittstelle (380) aktiviert wird.

12. Verfahren nach einem Ansprüche 9 bis 11, **dadurch gekennzeichnet, dass** der folgende weitere Schritt ausgeführt wird:
H. Kommunizieren, durch den Prozessor, des wenigstens einen ERSTEN VERIFI-ZIERUNGSCODES sowie optional anderer Information, die mit dem Produkt assoziiert ist, an einen entfernten Server, der konsequent eine Garantie eines Produkts, welches mit dem Label assoziiert ist, aktiviert.

13. Verfahren nach einem der Ansprüche 9 bis 12, **dadurch gekennzeichnet, dass** in Schritt B auch der ZUGANGSCODE gelesen wird und dass ein weiterer Schritt zum Verbinden eines entfernten Servers und einer Adresse mit einer Datenbank auf der Basis des ZUGANGSCODES ausgeführt wird.

14. Verfahren nach einem der Ansprüche 9 bis 13, **dadurch gekennzeichnet, dass**, wenn das Ergebnis von Schritt C negativ ist, ein Alarm oder eine Anzeige eines bereits genutzten oder nicht nutzbaren Labels an den Anzeigebildschirm gesendet wird.

15. System (300) einer Produktauthentifizierung, umfassend:
- wenigstens ein Label (100) zur Produktauthentifizierung, das drahtlos abfragbare elektronische Mittel umfasst, die mit einem Speicher (140) ausgestattet sind;
- wenigstens ein Lesegerät (320), insbesondere ein Smartphone, zum Lesen der drahtlos abfragbaren elektronischen Mittel (140) zum Erhalten eines oder mehrerer Codes, wobei das Lesegerät mit einem Anzeigebildschirm ausgestattet ist;
- einen Prozessor, der ein Programm zur Verifizierung der Authentizität des Labels (100) auf der Basis von dem einen oder den mehreren Codes ausführt,
wobei das System **dadurch gekennzeichnet ist, dass**:
- das Label das Label gemäß einem der Ansprüche 1 bis 8 ist;
- das Programm konfiguriert ist, um die Schritte B, C, E, F des Verfahrens gemäß einem der Ansprüche 9 bis 14 auszuführen.

## Revendications

1. Etiquette (100) pour la vérification de l'authenticité d'un produit, comprenant au moins une première couche (110) et une seconde couche (120) ancrée à ladite première couche, sur ladite première couche (110) des moyens électroniques interrogeables de manière sans fil (140) étant fixés, qui sont équipés d'une mémoire, ladite seconde couche (120) incluant une partie amovible (160), au moins sur ladite partie amovible (160), des moyens d'interruption d'interrogation étant pourvus, qui sont adaptés pour interrompre l'interrogation desdits moyens électroniques interrogeables de manière sans fil (140) ;
l'étiquette étant **caractérisée en ce que** :
- ladite partie amovible (160) est configurée de manière à montrer irréversiblement, lors de l'utilisation, qu'elle a été retirée ;
- sur lesdits moyens électroniques interrogeables de manière sans fil (140), au moins un PREMIER CODE DE VERIFICATION, pour la vérification de la première lecture de l'étiquette, et au moins un CODE DE VALIDATION, pour la vérification de l'authenticité de l'étiquette, sont stockés ;
- sur ladite première couche un GRAPHISME (150) est présent, qui est recouvert par la partie amovible (160), n'est pas lisible par un dispositif de reconnaissance optique, et est généré par un algorithme basé sur ledit au moins un CODE DE VALIDATION.

2. Etiquette selon la revendication 1, **caractérisée en ce que** lesdits moyens d'interruption d'interrogation sont constitués par des moyens de blindage électromagnétique ou des moyens de court-circuitage.

3. Etiquette selon la revendication 1 ou 2, **caractérisée en ce que** sur lesdits moyens électroniques interrogeables de manière sans fil (140), un CODE D'ACCES est en outre stocké, qui est adapté pour l'adressage à une base de données distante.

4. Etiquette selon l'une quelconque des revendications 1 à 3, **caractérisée en ce que** lesdits moyens électroniques interrogeables de manière sans fil (140) sont constitués par ou incluent une RFID.

5. Etiquette selon l'une quelconque des revendications 1 à 4, **caractérisée en ce que** sur ladite seconde couche (120), un code QR (130) est pourvu.

6. Etiquette selon la revendication 5, **caractérisée en ce que** le code QR (130) est pourvu à l'extérieur de ladite partie (160).

7. Etiquette selon l'une quelconque des revendications 1 à 6, **caractérisée en ce qu'**elle comprend une perforation (165) pour permettre le retrait de ladite partie amovible (160), ladite perforation étant adaptée pour montrer irréversiblement, lors de l'utilisation, que le retrait s'est produit.

8. Etiquette selon l'une quelconque des revendications 1 à 7, **caractérisée en ce que** ledit au moins un CODE DE VALIDATION inclut un numéro de série desdits moyens électroniques interrogeables de manière sans fil (140).

9. Procédé (300) pour l'authentification d'étiquette, **caractérisé par** le fait d'utiliser une étiquette (100) pour l'authentification de produit telle que définie dans l'une quelconque des revendications 1 à 8, et par le fait d'effectuer les étapes suivantes :
A. retirer la partie amovible (160) de ladite étiquette (100) ;
B. interroger, par un dispositif de lecture (320), lesdits moyens électroniques interrogeables de manière sans fil (140), pour obtenir ledit au moins un PREMIER CODE DE VERIFICATION et ledit au moins un CODE DE VALIDATION ;
C. vérifier, par un processeur, que ledit au moins un PREMIER CODE DE VERIFICATION est valide ;
D. dans le cas d'un résultat positif de l'étape C, stocker, dans la mémoire desdits moyens électroniques interrogeables de manière sans fil (140), des informations de lecture réussie dudit au moins un PREMIER CODE DE VERIFICATION ;
E. générer, par ledit processeur, au moins sur la base dudit au moins un CODE DE VALIDATION, un ensemble de symboles ;
F. montrer, sur un écran d'affichage, ledit ensemble de symboles de l'étape E ;
G. vérifier, par un utilisateur, que ledit ensemble de symboles montré sur ledit écran d'affichage correspond au moins partiellement au contenu graphique dudit GRAPHISME (150).

10. Procédé selon la revendication 9, **caractérisé en ce qu'**une alarme ou une indication d'impossibilité de poursuivre étant donné que l'étiquette a déjà été utilisée est activée dans le cas où le résultat de l'étape G est négatif.

11. Procédé selon la revendication 10, **caractérisé en ce que** l'alarme ou l'indication d'impossibilité de poursuivre est activée via une interface WEB (380).

12. Procédé selon l'une quelconque des revendications 9 à 11, **caractérisé par** l'exécution de l'étape supplémentaire suivante :
H. communiquer, par ledit processeur, ledit au moins un PREMIER CODE DE VERIFICATION, et facultativement d'autres informations associées au produit, à un serveur distant, qui active en conséquence une garantie d'un produit associé à ladite étiquette.

13. Procédé selon l'une quelconque des revendications 9 à 12, **caractérisé en ce qu'**à l'étape B également ledit CODE D'ACCES est lu, et une étape supplémentaire est effectuée pour se connecter à un serveur distant et s'adresser à une base de données sur la base dudit CODE D'ACCES.

14. Procédé selon l'une quelconque des revendications 9 à 13, **caractérisé en ce que**, si le résultat de l'étape C est négatif, une alarme ou une indication d'étiquette déjà utilisée ou non utilisable est envoyée audit écran d'affichage.

15. Système (300) d'authentification de produit, comprenant :
- au moins une étiquette (100) pour l'authentification de produit, comprenant des moyens électroniques interrogeables de manière sans fil qui sont équipés d'une mémoire (140) ;
- au moins un dispositif de lecture (320), en particulier un smartphone, pour lire lesdits moyens électroniques interrogeables de manière sans fil (140) pour obtenir un ou plusieurs codes, le dispositif de lecture étant pourvu d'un écran d'affichage ;
- un processeur qui exécute un programme pour la vérification de l'authenticité de l'étiquette (100) sur la base desdits un ou plusieurs codes,
le système étant **caractérisé en ce que** :
- ladite étiquette est l'étiquette selon l'une quelconque des revendications 1 à 8 ;
- ledit programme est configuré pour effectuer les étapes B, C, E, F du procédé selon l'une quelconque des revendications 9 à 14.
